# EUROPÄISCHE PATENTSCHRIFT

(11) **EP 0 976 609 B1**
(45) Veröffentlichungstag und Bekanntmachung des Hinweises auf die Patenterteilung: **22.03.2006**
(21) Anmeldenummer: 99113129.3
(22) Anmeldetag: 07.07.1999
(51) Int. Cl.: B60N 3/00

(54) **Klapptisch zum Anbringen an einer Rückseite einer Rückenlehne eines Fahrgastsitzes in einem Omnibus oder Flugzeug**
Folding table to attach to the rear part of a backrest of a passenger seat in a bus or in an aircraft
Table pliante à attacher à la face arrière d'un dossier d'un siège de passager dans un omnibus ou un avion

(30) Priorität: 28.07.1998 DE 19833888
(43) Veröffentlichungstag der Anmeldung: 02.02.2000
(60) Teilanmeldung: 05017267.5
(73) Patentinhaber: DaimlerChrysler AG, 70567 Stuttgart (DE)
(72) Erfinder: Plocher, Bernd, 72108 Rottenburg-Seebronn (DE); Kühn, Stefan, 75387 Neubulach (DE); Hein, Andre, 71083 Herrenberg (DE); Keller, Michael, 72250 Freudenstadt (DE); Groth, Sören, 71083 Herrenberg (DE); Jessberger, Monika, 89231 Neu-Ulm (DE); Kriegelsteiner, Franz, 89171 Illerkirchberg (DE)

(56) Entgegenhaltungen:
- DE-A- 3 942 629
- DE-A- 4 125 783
- DE-A- 4 344 372
- DE-A- 19 508 987
- US-A- 4 583 707
- US-A- 5 342 009

## Beschreibung

Die Erfindung betrifft einen Klapptisch zur Anbringung an einer Rückseite einer Rückenlehne eines Fahrgastsitzes in einem Omnibus oder Flugzeug mit den Merkmalen des Oberbegriffs des Anspruchs 1.

Derartige Klapptische sind an sich bekannt, sie sind mittels eines Schwenkgelenks an der Rückseite der Rückenlehne eines Fahrgastsitzes angeordnet. Die bekannten Klapptische lassen sich aus einer Nichtgebrauchslage, in der sie im wesentlichen an der Rückseite der Rückenlehne anliegen, in eine Gebrauchslage, in der sie in etwa horizontal von der Rückseite der Rückenlehne abstehen, und umgekehrt schwenken. Auch ist es bekannt, einen derartigen Klapptisch mit einer beispielsweise kreisrunden Vertiefung auszubilden, in die ein Getränkebehälter wie eine Getränkedose, eine Tasse, ein Becher einstellbar ist. Die Vertiefung gibt dem eingestellten Getränkebehälter Halt gegen Verrutschen, verhindert jedoch nicht ein Umkippen des Getränkebehälters.

Aus der Druckschrift US 4,583,707 ist ein tischartiger Handschuhfachdeckel bekannt, der auf seiner Innenseite einen Halter aufweist. Bei aufgeklapptem Handschuhfachdeckel ist dessen Innenseite horizontal angeordnet, und der ringartige Halter kann über eine Führung von einer abgesenkten Stellung, in der er auf den Handschuhfachdeckel aufliegt, in eine angehobene Position verbracht werden. Einem eingestellten Gefäß, beispielsweise einem Glas, kann hierdurch eine gute Abstützung gegeben werden. Die vorgeschlagene Anordnung hat jedoch den Nachteil, daß der Halter nur bei geöffnetem Handschuhfachdeckel benutzbar ist. Für einen Klapptisch an der Rückseite der Rückenlehne eines Fahrgastsitzes würde dies bedeuten, daß der Halter nur benutzbar ist, wenn der Klapptisch sich in Gebrauchslage, d.h. in horizontaler Lage, befindet. Es kann jedoch erwünscht sein, daß der Halter unabhängig von der Lage des Klapptisches bedienbar ist.

Der Erfindung liegt daher die Aufgabe zugrunde, einen Klapptisch zu schaffen, bei dem ein Halter für einen Getränkebehälter unabhängig von der Stellung des Klapptisches benutzbar ist.

Diese Aufgabe wird erfindungsgemäß durch die Merkmale des Anspruchs 1 gelöst. Der erfindungsgemäße Klapptisch weist einen Halter auf, der über eine Führung beweglich mit dem Klapptisch verbunden ist. In einer Nichtgebrauchslage ist der Halter versenkt im Klapptisch angeordnet, so daß der Halter nicht aus dem Klapptisch vorsteht, wodurch die gesamte Fläche des Klapptischs nutzbar ist und der Halter das Schwenken des

Klapptischs in die Nichtgebrauchslage nicht behindert. In der Gebrauchslage des Klapptischs läßt sich der Halter so aus dem Klapptisch herausbewegen, daß ein Getränkebehälter in den Halter einstellbar ist. Der erfindungsgemäße Klapptisch hat den Vorteil, daß sein Halter für einen Getränkebehälter in der Nichtgebrauchslage keinen zusätzlichen Platz einnimmt und in der Gebrauchslage einen eingestellten Getränkebehälter sicher gegen Kippen hält.

Bei einer Ausgestaltung der Erfindung ist eine Schiebeführung vorgesehen, mit der der Halter am Klapptisch angebracht ist. Durch die Schiebeführung läßt sich der Halter zu einer Seite aus dem Klapptisch herausziehen und bei Nichtgebrauch wieder in den Klapptisch hineinschieben. Diese Ausgestaltung der Erfindung hat den Vorteil, daß der Halter in seiner Gebrauchslage keinen Platz auf dem Klapptisch einnimmt, so daß die gesamte Fläche des Klapptischs beispielsweise für Eßwaren zur Verfügung steht und ein Getränkebehälter zusätzlich in den zur Seite herausgezogenen Halter eingestellt werden kann.

Bei einer Ausgestaltung der Erfindung ist ein Schwenkgelenk als Führung des Halters am Klapptisch vorgesehen. Der Halter ist bei dieser Ausgestaltung der Erfindung um einen begrenzten Schwenkwinkel vom Klapptisch nach oben schwenkbar. Der Halter befindet sich in der Gebrauchsstellung oberhalb des Klapptischs, so daß er einen eingestellten Getränkebehälter, der auf dem Klapptisch steht, sicher gegen Kippen hält. Diese Ausgestaltung der Erfindung hat den Vorteil, daß ein eingestellter Getränkebehälter nicht nach unten unter den Klapptisch vorsteht. Der Getränkebehälter ist also Beinen und Knien eines Fahrgastes nicht im Weg. Des weiteren vermeidet diese Aus-. gestaltung der Erfindung, daß der Fahrgast den Getränkebehälter versehentlich mit einem Knie nach oben aus dem Halter herausstößt.

Erfindungsgemäß ist es vorgesehen, die Führung des Halters am Klapptisch so auszubilden, daß der Halter in der Nichtgebrauchslage des Klapptischs in seine Gebrauchslage verbracht werden kann. Dies hat den Vorteil, daß der Halter für den Getränkebehälter unabhängig vom Klapptisch benutzt werden kann, ohne daß der Klapptisch in seine horizontale Gebrauchsstellung geschwenkt werden muß, in der er die Bewegungsfreiheit eines Fahrgastes einschränkt. Es können zwei Führungen vorgesehen sein, von denen die eine dazu dient, den Halter für den Getränkebehälter in die Gebrauchslage zu verbringen, wenn sich der Klapptisch in der Gebrauchslage befindet. Die andere Führung dient dazu, den Halter in die Gebrauchslage zu verbringen, wenn der Klapptisch die Nichtgebrauchslage einnimmt. Beide Möglichkeiten lassen sich auch mit einer Führung des Halters am Klapptisch verwirklichen.

In bevorzugter Ausgestaltung der Erfindung ist vorgesehen, die Führung, die das Verbringen des Halters in die Gebrauchslage bei in der Nichtgebrauchslage befindlichem Klapptisch ermöglicht, als Schwenkgelenk mit begrenztem Schwenkwinkel auszubilden.

Bei einer Ausgestaltung der Erfindung ist ein Öffnungsfederelement vorgesehen, das den Halter in die Gebrauchslage verschwenkt. Eine entriegelbare Verriegelungseinrichtung hält den Halter gegen die Kraft des Öffnungsfederelements in der Nichtgebrauchslage. Nach Entriegelung der Verriegelungseinrichtung verschwenkt der Halter federbetätigt in seine Gebrauchslage. Die Schwenkbewegung wird vorzugsweise durch ein Dämpfungselement gedämpft. Es können sowohl das Schwenken des Halters in die Gebrauchslage bei in der Gebrauchsstellung befindlichem Klapptisch wie auch bei in der Nichtgebrauchsstellung befindlichem Klapptisch federbetätigt erfolgen, wozu vorzugsweise zwei Öffnungsfederelemente Verwendung finden.

Bei einer Ausgestaltung der Erfindung ist eine Stütze vorgesehen, die über ein Schwenkgelenk mit dem Halter oder dem Klapptisch verbunden ist. Die Stütze ist um einen begrenzten Schwenkwinkel durch Schwer- und/oder Federkraft vom Halter nach unten schwenkbar, sie stützt einen in den Halter eingestellten Getränkebehälter ab. Die Stütze ist insbesondere dann vorgesehen, wenn ein in den Halter eingestellter Getränkebehälter nicht auf dem Klapptisch aufsteht, also beispielsweise bei seitlich aus dem Klapptisch herausziehbarem Halter oder bei Benutzung des Halters in der Nichtgebrauchslage des Klapptischs.

Zum Verschwenken der Stütze vom Halter nach unten ist bei einer Ausgestaltung der Erfindung ein Federelement vorgesehen. Als Federelement für die Stütze kann das Öffnungsfederelement des Halters Verwendung finden.

Bei einer Ausgestaltung der Erfindung ist ein Sicherheitsbeschlag für den Klapptisch vorgesehen, der ein Schwenken des Klapptischs aus der horizontalen Gebrauchslage nach unten zuläßt, wenn der Klapptisch überbeansprucht wird. Der Sicherheitsbeschlag dient zur Verminderung des Verletzungsrisikos eines Fahrgastes bei einem Unfall, er ermöglicht ein Wegklappen des Klapptischs nach unten, wenn der Fahrgast beispielsweise mit dem Kopf auf den Klapptisch trifft. Bei normaler Belastung hält der Sicherheitsbeschlag den Klapptisch in seiner Gebrauchslage. Der Sicherheitsbeschlag weist einen Anschlag auf, der den Schwenkwinkel des Klapptischs von der Nichtgebrauchsstellung in die in etwa horizontale Gebrauchsstellung begrenzt. Dieser Anschlag wird durch Überlastung des Klapptischs überwunden. Diese Ausgestaltung des erfindungsgemäßen Klapptischs kann unabhängig vom Vorhandensein des Halters für einen Getränkebehälter am erfindungsgemäßen Klapptisch verwirklicht sein.

Bei einer Weiterbildung der Erfindung ist der Anschlag am Umfang eines Schwenkzapfens ausgebildet, um den der Klapptisch schwenkbar ist. Der Anschlag wirkt mit einem federbetätigten Schieber zusammen und drückt den Schieber außer Eingriff vom Anschlag, wenn der Klapptisch überlastet wird, so daß der Klapptisch aus seiner horizontalen Gebrauchsstellung nach unten wegschwenkt. Der Schwenkzapfen kann feststehen oder mit dem Klapptisch mitdrehend sein.

Zur Befestigung kann der Klapptisch beispielsweise mit seitlich abstehenden Befestigungszapfen in komplementäre Aufnahmen von Klapptischhaltern eingesetzt werden, die an der Rückenlehne des Fahrgastsitzes angebracht sind. Um bei in der Neigung verstellbarer Rückenlehne ein Mitschwenken des Klapptischs zu vermeiden, können auch seitliche Streben als Klapptischhalter vorgesehen sein, die an einem feststehenden Teil des Fahrgastsitzes oder an einem Fahrzeugboden angebracht sind und daher nicht mit der Rückenlehne mitschwenken. Um die horizontale Gebrauchslage des Klapptischs nicht justieren zu müssen, ist bei einer Ausgestaltung ein Adapter vorgesehen, der durch Formschluß sowohl am Klapptisch als auch am Klapptischhalter die horizontale Gebrauchslage sicherstellt. Durch Verwendung unterschiedlicher Adapter läßt sich der Klapptisch an unterschiedliche Klapptischhalter, insbesondere an in unterschiedlichen Winkeln angebrachte Klapptischhalter, anpassen. Diese Ausgestaltung der Erfindung hat den Vorteil, daß der Klapptisch lediglich in dieKlapptischhalter eingesetzt werden muß und die horizontale Gebrauchslage durch das Einsetzen in die Klapptischhalter bereits gegeben ist und nicht erst eingestellt werden muß.

Der Formschluß kann beispielsweise durch ein unregelmäßiges Polygon- oder Zahnprofil, durch eine nach innen oder außen abstehende Nase oder dgl. bewirkt werden. Bei einer Ausgestaltung der Erfindung ist der Adapter als Adapterring mit einer eine eindeutige Winkelstellung festlegenden Innen- und Außenkontur ausgebildet.

Die Erfindung wird nachfolgend anhand zweier in der Zeichnung dargestellter Ausführungsbeispiele näher erläutert. Es zeigen:
- Figur 1: einen erfindungsgemäßen Klapptisch in einer Gebrauchslage;
- Figur 2: ein Unterteil des Klapptischs aus Figur 1;
- Figur 3: den Klapptisch aus Figur 1 in einer Nichtgebrauchslage;
- Figur 4: eine vergrößerte Darstellung eines Befestigungszapfens des Klapptischs aus Figur 1;
- Figur 5: einen Querschnitt durch den Befestigungszapfen aus Figur 4;
- Figur 6: einen Adapterring des erfindungsgemäßen Klapptischs;
- Figur 7: ein zweites Ausführungsbeispiel eines erfindungsgemäßen Klapptischs in einer Gebrauchslage; und
- Figur 8: den Klapptisch aus Figur 6 in einer Nichtgebrauchslage.

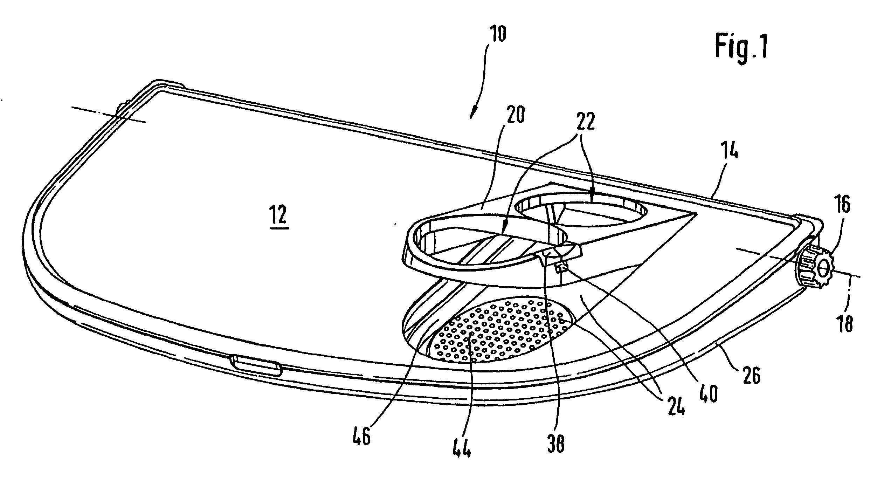

Figur 1 zeigt einen erfindungsgemäßen Klapptisch 10 in einer Gebrauchslage, in der er horizontal von einer Rückseite einer nicht dargestellten Rückenlehne eines Fahrgastsitzes in einem Omnibus oder Flugzeug absteht. Der Klapptisch 10 ist aus Kunststoff-Spritzgußteilen zusammengesetzt, er weist eine Stellfläche 12 auf.

Zur Anbringung an der Rückenlehne stehen seitlich nahe einem vorderen Rand 14 des Klapptischs 10 profilierte Befestigungszapfen 16 ab, die durch Formschluß drehfest in nicht dargestellte, komplementäre Aufnahmen einsetzbar sind, die an der Rückseite der nicht dargestellten Rückenlehne angebracht sind. Die Befestigungszapfen 16 sind um einen begrenzten Schwenkwinkel schwenkbar im Klapptisch 10 gelagert, sie definieren eine horizontale Schwenkachse 18 nahe dem vorderen Rand 14 des Klapptischs 10, zu dem die Schwenkachse 18 parallel verläuft.

Im rechten Bereich des Klapptischs 10 ist ein Halter 20 zum Einstellen eines nicht dargestellten Getränkebehälters wie beispielsweise einem Becher, einer Tasse oder einer Getränkedose eingelassen. Der Halter 20 ist plattenförmig und hat in der Draufsicht die Form eines Halbovals, wobei eine halbrunde Seite des Halbovals dem vorderen Rand 14 des Klapptischs 10 abgewandt ist.

Der Halter 20 ist um eine mit der Schwenkachse 18 des Klapptischs 10 fluchtende Achse schwenkbar im Klapptisch 10 gelagert. In seiner Gebrauchslage steht der Halter 20 schräg nach oben aus dem Klapptisch 10 vor. Der Halter 20 weist zwei kreisrunde Einstellöffnungen 22 für zwei Getränkebehälter auf. Die eingestellten Getränkebehälter stehen auf einer im Klapptisch 10 versenkten Stellfläche 24 auf. Bei Nichtgebrauch läßt sich der Halter 20 in eine im Klapptisch 10 versenkte Nichtgebrauchslage schwenken, in der der Halter 20 bündig mit der Abstellfläche 12 des Klapptischs 10 ist.

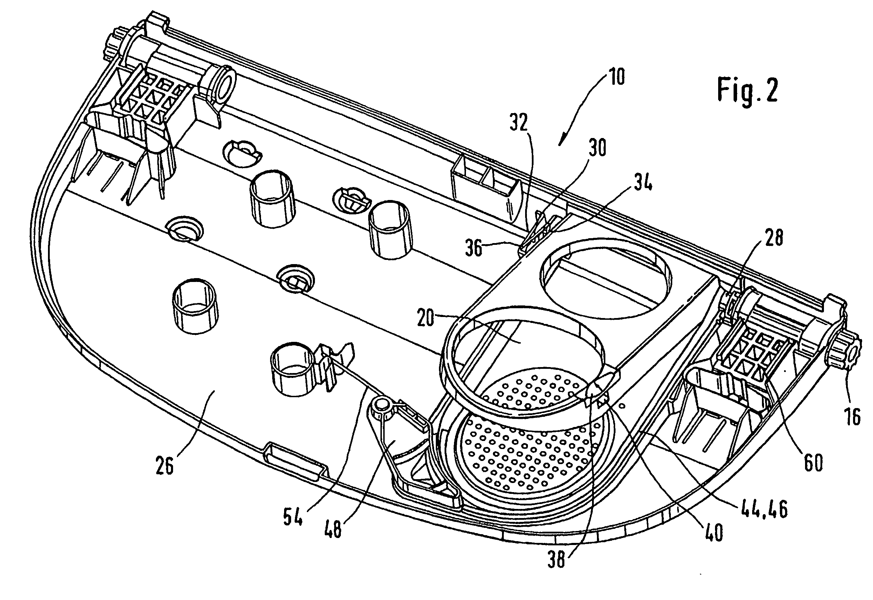

Der Klapptisch 10 ist zweischalig aus einem die Abstellfläche 12 umfassenden Oberteil und einem Unterteil hergestellt. Figur 2 zeigt den Klapptisch 10 ohne das Oberteil, so daß das Unterteil 26 des Klapptischs 10, in dem der Halter 20 und die Befestigungszapfen 16 schwenkbar gelagert sind, sichtbar ist. Der Halter 20 ist mit einer Schwenkzapfenverbindung 28 im Klapptisch 10 gelagert. Die Schwenkzapfenverbindung 28 weist zwei seitlich vom Halter 20 abstehende Lagerzapfen auf, die in komplementäre Lagerlöcher des Unterteils 26 des Klapptischs 10 eingreifen. Eine seitlich angebrachte Bügelfeder 30, die sich am Unterteil 26 des Klapptischs 10 abstützt, drückt den Halter 20 in seine schräg nach oben stehende Gebrauchslage. Die Schwenkbewegung des Halters 20 wird von einem Rotationsdämpfungselement 32 gedämpft, dessen Zahnrad mit einem Zahnradsegment 34 kämmt, welches einstückig an einer Seite des Halters 20 angebracht ist. Das Rotationsdämpfungselement 32 ist in eine Aufnahme 36 im Unterteil 26 des Klapptischs 10 drehfest eingesetzt.

Eine Verriegelungseinrichtung 38, 40 hält den Halter 20 gegen die Kraft der Schenkelfeder 30 in der im Klapptisch 10 versenkten Nichtgebrauchslage, wie sie in Figur 2 dargestellt ist. Die Verriegelungseinrichtung 38, 40 umfaßt eine Taste 38, die mit Abstand von der Schwenkzapfenverbindung 28 am Seitenrand des Halters 20 angeordnet ist. Die Taste 38 ist einstückig mit einer seitlich über den Halter 20 vorstehenden Rastnase 40 (Figur 1), die in der Nichtgebrauchslage des Halters 20 die Abstellfläche 12 des Klapptischs 10 untergreift und dadurch den Halter 20 in der Nichtgebrauchslage hält. Durch Druck auf die Taste 38 wird die Rastnase 40 außer Eingriff gebracht, so daß der Halter 20 federbetätigt in die schräg nach oben stehende Gebrauchslage schwenkt. Die Rastnase 40 weist eine Schrägfläche an ihrer Unterseite auf, so daß sie beim Niederdrücken des Halters 20 in den Klapptisch 10 selbsttätig unter der Abstellfläche 12 einrastet.

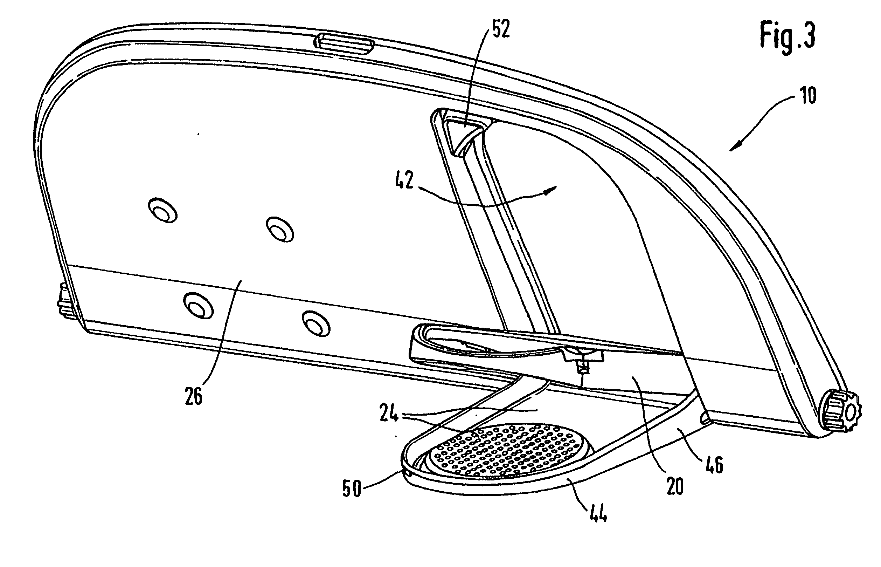

Figur 3 zeigt den Klapptisch 10 in einer nach oben geschwenkten Nichtgebrauchslage, in der der Klapptisch 10 an die Rückseite der Rückenlehne des nicht dargestellten Fahrgastsitzes geschwenkt ist. Figur 3 zeigt also einen Blick auf eine Unterseite des Klapptischs 10.

Wie in Figur 3 zu sehen, ist der Halter 20 in einer von einer Oberseite zur Unterseite des Klapptischs 10 durchgehenden Ausnehmung 42 des Klapptischs 10 aufgenommen. Unter dem Halter 20 ist eine Stütze 44 angeordnet, deren Boden die Abstellflächen 24 für in den Halter 20 eingestellte Getränkebehälter bildet. Die Stütze 44 hat in Draufsicht ebenso wie der Halter 20 die Form eines Halbovals. Die Stütze 44 ist mit einem nach oben stehenden Rand 46 als Auffangschale für aus einem eingestellten Getränkebehälter herausschwappende Flüssigkeit ausgebildet. Eine Höhe des Randes 46 ist geringer als eine Dicke des Klapptischs 10. Der Halter 20 liegt in der Nichtgebrauchslage in der Stütze 44 ein.

Die Stütze 44 ist um dieselbe Schwenkachse wie der Halter 20 im Klapptisch 10 gelagert. Zur Schwenklagerung sind Zapfenlöcher in der Seitenwand 46 der Stütze 44 angebracht, die von den Zapfen des Halters 20 durchgriffen werden. Die Stütze 44 ist also wie der Halter 20 mit dem Zapfenlager 28 (Figur 2) schwenkbar am Klapptisch 10 angebracht.

Eine Verriegelungseinrichtung 48, 50, 52 hält die Stütze 44 in einer in den Klapptisch 10 versenkten Grundstellung, in der die Stütze 44 bündig mit einer Unterseite des Klapptischs 10 ist. Die Verriegelungseinrichtung umfaßt einen Schwenkriegel 48, der schwenkbar im Unterteil 26 des Klapptischs 10 gelagert ist (Figur 2). Eine mit dem Schwenkriegel 48 einstückige, in der Zeichnung nicht sichtbare Nase greift in eine Aussparung 50 im Seitenrand 46 der Stütze 44 ein, so daß die Stütze 44 in ihrer im Klapptisch 10 versenkten Grundstellung gehalten ist. Durch Druck gegen eine mit dem Schwenkriegel 48 einstückige, an der Unterseite des Klapptischs 10 angeordnete Taste 52 (Figur 3) läßt sich der Schwenkriegel 48 außer Eingriff von der Stütze 44 bringen, so daß die Stütze 44 durch Schwerkraft aus der Unterseite des Klapptischs 10 herausschwenkt. In der an die Rückseite der nicht dargestellten Rückenlehne Nichtgebrauchslage des Klapptischs 10 schwenkt die Stütze 44 in eine horizontale Stützlage herunter, wie in Figur 3 dargestellt. Eine Schenkelfeder 54 drückt den Schwenkriegel 48 in Eingriff mit der Stütze 44.

Die Schenkelfeder 32 des Halters 20, die sich an der Stütze 44 abstützt, drückt den Halter 20 in eine schräg nach oben von der Stütze 44 abstehende Gebrauchslage. In dieser Lage steht der Halter 20 ebenso wie die Stütze 44 an der Unterseite des Klapptischs 10 heraus. In der Nichtgebrauchslage des Klapptischs 10, in der der Klapptisch 10 schräg nach oben stehend an der Rückseite der Rückenlehne des nicht dargestellten Fahrgastsitzes anliegt, schwenken also der Halter 20 und die Stütze 44 nach Entriegelung des Schwenkriegels 48 aus einer Unterseite des Klapptischs 10 heraus. Die Stütze 44 schwenkt bis in eine horizontale Stützlage, der Halter 20 steht schräg nach oben von der Stütze 44 ab, er befindet sich also oberhalb der Stütze 44 und hält einen nicht dargestellten, in den Halter 20 eingestellten Getränkebehälter kippsicher. Der Halter 20 ist dadurch sowohl in der Gebrauchslage als auch in der Nichtgebrauchslage des Klapptischs 10 zum Einstellen eines oder zweier Getränkebehälter nutzbar.

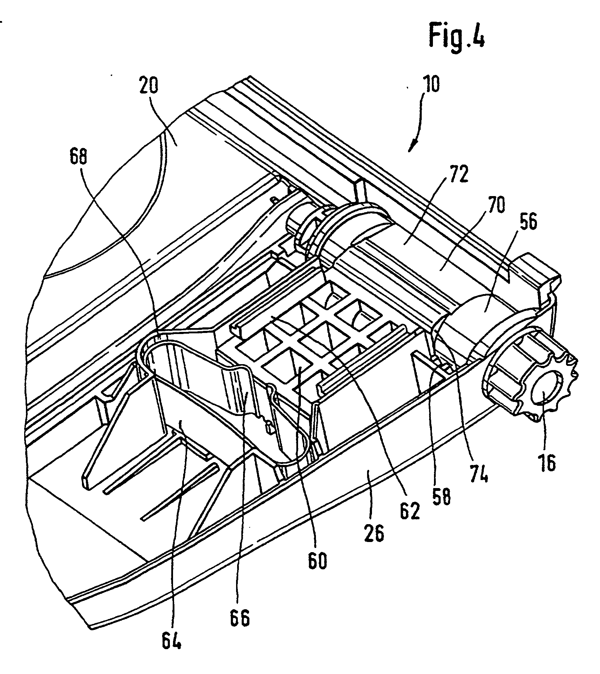

Die seitlich aus dem Klapptisch 10 vorstehenden Befestigungszapfen 16 sind in Vergrößerung in Figur 4 dargestellt. Sie weisen zylindrische Lagerflächen 56 auf, mit denen sie in Halblagem 58 im Unterteil 26 sowie in ebensolchen, nicht sichtbaren Halblagem im Oberteil des Klapptischs 10 einliegen. Bei drehfester Anbringung des seitlich aus dem Klapptisch 10 vorstehenden Teils der Befestigungszapfen 16 in nicht dargestellte Aufnahmen ist der Klapptisch 10 schwenkbar um die Befestigungszapfen 16 gelagert.

Zur Begrenzung des Schwenkwinkels des Klapptischs 10 ist an jedem Befestigungszapfen 16 ein Schieber 60 im Unterteil 26 des Klapptischs 10 vorgesehen. Der Schieber 60 ist in einer Schieberführung 62 radial zum Befestigungszapfen 16 verschiebbar im Klapptisch 10 geführt. Eine zu einem Oval gebogene Blattfeder 64 drückt mit ihren beiden freien Enden 66 gegen den Schieber 60 und dadurch den Schieber 60 radial gegen den Befestigungszapfen 16. Die Doppelbügelfeder 64 ist in eine Aufnahme 68 im Unterteil 26 des Klapptischs 10 eingesetzt.

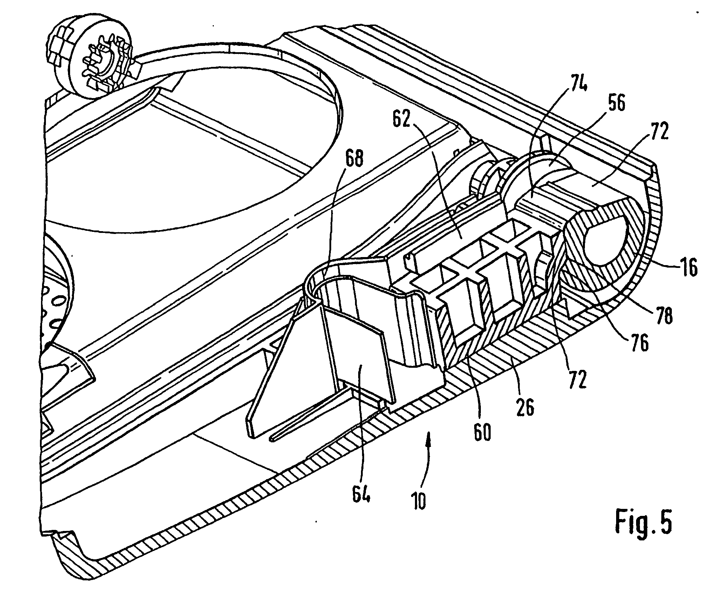

Ein zwischen den zylindrischen Lagerflächen 56 befindlicher Mittelabschnitt 70 der Befestigungszapfen 16 ist unrund geformt, die Form dieses Mittelabschnitts 70 ist am besten in Figur 5 erkennbar, die einen Längsschnitt durch den Schieber 60 und einen Radialschnitt durch den Befestigungszapfen 16 in derselben Schnittebene zeigt. Der Mittelabschnitt 70 des Befestigungszapfens 16 weist zwei Sekantenflächen 72 auf, die in etwa rechtwinklig zueinander angeordnet sind. Gegen eine der beiden Sekantenflächen 72 drückt der Schieber 60 in der Gebrauchslage des Klapptischs 10, gegen die andere Sekantenfläche 72 drückt der Schieber 60 in der Nichtgebrauchslage des Klapptischs 10. In Figuren 4 und 5 ist die Gebrauchslage des Klapptischs 10 dargestellt. Zum Verschwenken des Klapptischs 10 aus der Gebrauchslage in die Nichtgebrauchslage und umgekehrt muß der Schieber 60 einen Wulst 74 überwinden, der zwischen den beiden Sekantenflächen 72 achsparallel und einstückig am Mittelabschnitt 70 des Befestigungszapfens 16 ausgebildet ist. Der Schieber 60 hält dadurch den Klapptisch 10 in der Gebrauchslage und der Nichtgebrauchslage.

Der Befestigungszapfen 16, der Schieber 60 und die Blattfeder 64, die den Schieber 60 in radialer Richtung gegen den Befestigungszapfen 16 drückt, bilden einen Sicherheitsbeschlag des erfindungsgemäßen Klapptischs 10. Im Anschluß an die Sekantenfläche 72, gegen die der Schieber 60 in der Gebrauchslage des Klapptischs 10 drückt, weist der Befestigungszapfen 16 einen Anschlag 76 in Form einer nach außen stehenden, in Längsrichtung des Befestigungszapfens 16 verlaufenden Nase auf. In der Gebrauchslage des Klapptischs 10 liegt der Schieber 60 mit einer Stufe 78, die an seiner Stirnseite ausgebildet ist, am Anschlag 76 des Befestigungszapfens 16 an. Die Stufe 78 und der Anschlag 76 begrenzen den Schwenkwinkel des Klapptischs 10 beim Herunterklappen in die Gebrauchslage so, daß der Klapptisch 10 horizontal steht. Der Anschlag 76 und die Stufe 78 sind nicht radial zum Befestigungszapfen 16 angeordnet, sondern in einem Winkel zur Radialen. Der Anschlag 76 und die Stufe 78 bilden also Schrägflächen. Dies bewirkt, daß bei einer Überbelastung des Klapptischs 10 der Anschlag 76 den Schieber 60 vom Befestigungszapfen 16 abdrückt, so daß der Klapptisch 10 über die horizontale Gebrauchslage nach unten schwenkt. Die vom Anschlag 76 und der Stufe 78 gebildeten Schrägflächen sind so ausgerichtet und eine Federkraft der Blattfeder 64 ist so gewählt, daß der Anschlag 76 erst ab einer Grenzbelastung, die erheblich über einer üblichen, durch auf dem Klapptisch 10 abgestellten Speisen, Getränke oder sonstigen Gegenständen ausgeübten Belastung liegt, nach unten wegklappt. Die Grenzbelastung, bei deren Überschreitung der Klapptisch 10 nach unten wegklappt, liegt bei beispielsweise 13 kg. Das nach unten Wegklappen des Klapptischs 10 bei Überbelastung ist dazu vorgesehen, daß der Klapptisch 10 nachgibt, wenn bei einem Unfall ein Fahrgast gegen den Klapptisch 10 stößt. Das Verletzungsrisiko wird dadurch verringert.

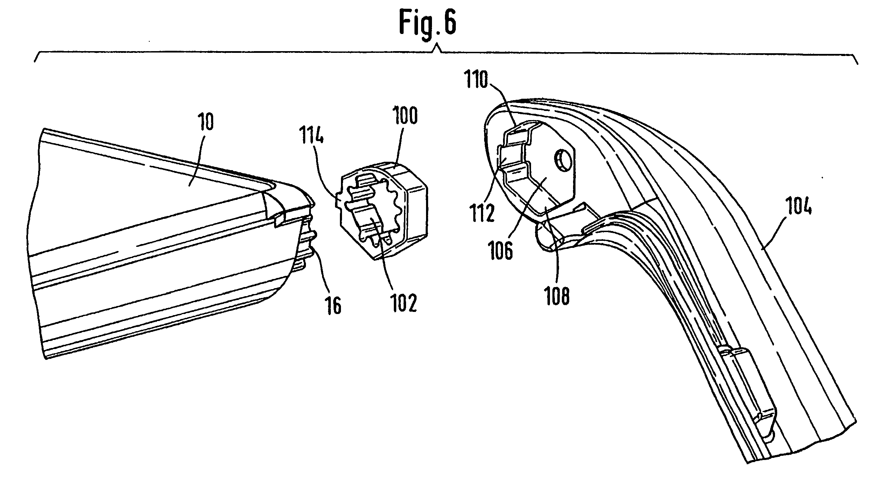

Zur Anbringung weist der Klapptisch 10 zwei Adapterringe 100 auf, die auf die seitlichen Befestigungszapfen 16 des Klapptischs 10 formschlüssig aufsetzbar sind (Figur 6). Die Befestigungszapfen 16 weisen im dargestellten Ausführungsbeispiel eine unregelmäßige Vielzahnkontur auf, auf die der Adapterring 100 mit einer komplementären Vielzahnkontur 102 an seiner Innenseite aufsetzbar ist. Die Vielzahnkonturen 102 des Befestigungszapfens 16 und des Adapterrings 100 bewirken einen Formschluß des Adapterrings 100 auf dem Befestigungszapfen 16, der eine eindeutige Winkelstellung des Adapterrings 100 auf dem Befestigungszapfen 16 festlegt.

Als Klapptischhalter sind im dargestellten Ausführungsbeispiel zwei Haltestreben 104 vorgesehen, die seitlich des Klapptisches 10 angeordnet sind. Die Haltestreben 104 sind an einem feststehenden, unteren Teil des nicht dargestellten Fahrgastsitzes angebracht und verlaufen schräg nach oben bis zu den Befestigungszapfen 16. Im Oberen Ende weisen die Haltestreben 104 Aufnahmen 106 auf, in die die Adapterringe 100 formschlüssig einsetzbar sind. Ein Umfang der Aufnahmen 106 weist vier Seiten 108 eines gedachten, unregelmäßigen Sechsecks auf, die durch eine konkav gewölbte Fläche 110 vervollständigt sind. In einer der vier Seiten 108 des gedachten Sechsecks ist eine Nut 112 angebracht. Ein Außenumfang des Adapterrings 100 ist komplementär zur Aufnahme 106 geformt, wobei ein nach außen abstehender Zapfen 114 zum Eingriff in die Nut 112 vorgesehen ist. Die Form der Aufnahme 106 und der Außenseite des Adapterrings 100 bewirkt einen Formschluß mit einer eindeutigen Winkelstellung des Adapterrings 100 in Bezug auf die Haltestrebe 104. Über den Adapterring 100 ist die Winkelstellung des Befestigungszapfens 16 des Klapptischs 10 zur Haltestrebe 104 eindeutig festgelegt und damit die horizontale Gebrauchslage des Klapptischs 10 fest eingestellt. Durch Verwendung eines Adapters 100, bei dem die Innenkontur 102 zur Außenkontur verdreht ist, läßt sich der Klapptisch 10 problemlos an Haltestreben 104 mit unterschiedlicher Neigung anpassen.

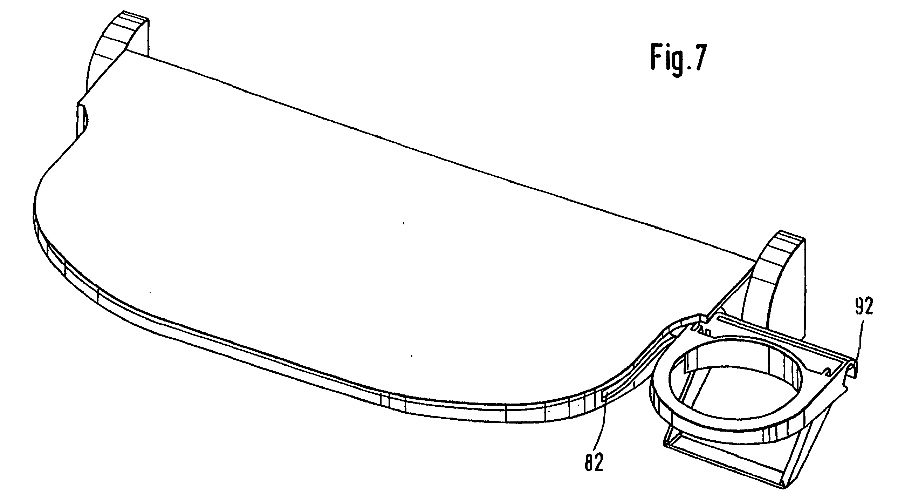

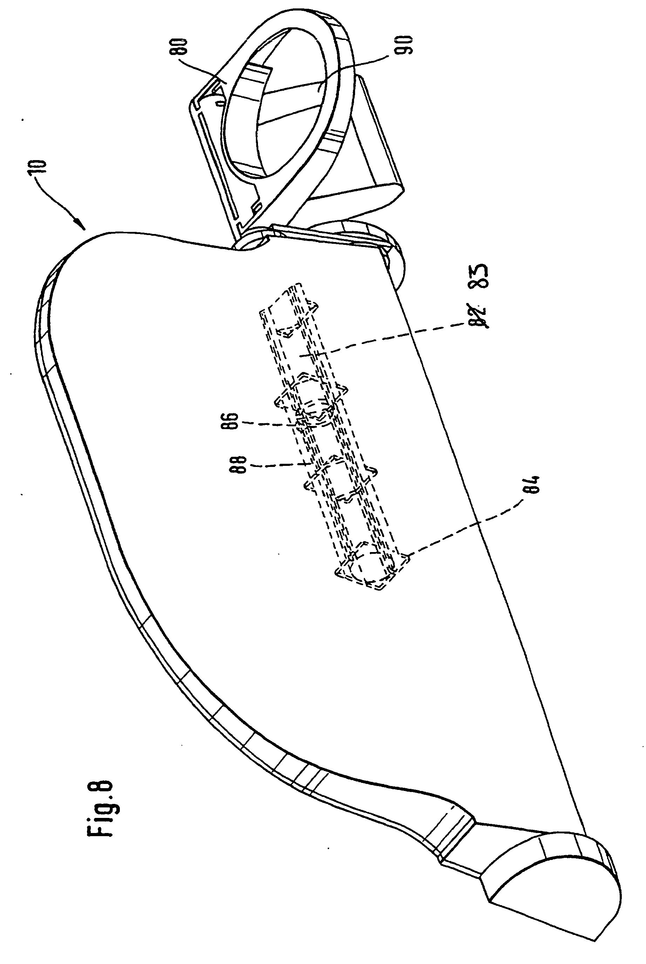

In Figuren 7 und 8 ist eine zweite Ausgestaltung eines erfindungsgemäßen Klapptischs 10 in der Gebrauchslage (Figur 7) und in der Nichtgebrauchslage (Figur 8) dargestellt. Bei dieser Ausgestaltung ist ein Halter 80 in Form eines Halterings zur Seite aus einem Schlitz 82 aus dem Klapptisch 10 ausziehbar am Klapptisch 10 angebracht. Zum Herausziehen weist der Halter 80 eine mit ihm einstückige Schiebestange 83 kreisrunden Querschnitts auf, die in Stangenhaltern 84 im Klapptisch 10 verschiebbar geführt ist. Eine radial von der Schiebestange 82 abstehende Nase 86 greift in eine in Längsrichtung der Schiebestange 82 verlaufende Nut 88 im Klapptisch 10 ein und hält den Halter 80 drehfest am Klapptisch 10. Um den Halter 80 gegenüber dem Klapptisch 10 verschwenken zu können, wird der Halter 80 über seine in Figur 6 dargestellte Gebrauchslage seitlich aus dem Klapptisch 10 herausgezogen, wodurch die Nase 86 aus der Nut 88 freikommt und der Halter 80 schwenkbar ist. Der Halter 80 läßt sich nun zur Unterseite des Klapptischs 10 verschenken, so daß er in der in Figur 8 dargestellten Nichtgebrauchslage des Klapptischs 10 eine horizontale Gebrauchslage einnimmt. Am Halter 80 ist eine Stütze 90 angebracht. Die Stütze 90 ist über eine Schwenkzapfenverbindung 92 schwenkbar mit dem Halter 80 verbunden, sie schwenkt durch Schwerkraft vom Halter 80 nach unten und stützt einen in den Halter 80 eingestellten Getränkebehälter ab.

Im übrigen ist der in Figuren 7 und 8 dargestellte Klapptisch 10 übereinstimmend mit dem in Figuren 1 bis 5 dargestellten Klapptisch aufgebaut und funktioniert in derselben Weise. Zur Vermeidung von Wiederholungen wird diesbezüglich auf die vorstehenden Erläuterungen zu Figuren 1 bis 5 verwiesen.

## Patentansprüche

1. Klapptisch (10) zur Anbringung an einer Rückseite einer Rückenlehne eines Fahrgastsitzes in einem Omnibus oder Flugzeug, wobei der Klapptisch ein Schwenkgelenk aufweist, durch das der Klapptisch zwischen einer Nichtgebrauchslage, in der der Klapptisch im wesentlichen an der Rückseite der Rückenlehne des Fahrgastsitzes anliegt, und einer Gebrauchslage, in der der Klapptisch (10) in etwa horizontal von der Rückseite der Rückenlehne des Fahrgastsitzes absteht, hin- und zurückschwenkbar ist, wobei der Klapptisch (10) einen Halter (20; 80) für einen Getränkebehälter aufweist, und wobei der Halter (20; 80) über eine Führung (28; 82, 84) beweglich mit dem Klapptisch (10) verbunden ist, so daß der Halter (20; 80) in der Gebrauchslage des Klapptischs (10) zwischen einer Nichtgebrauchslage, in der der Halter (20; 80) in den Klapptisch (10) versenkt ist, und einer Gebrauchslage, in der ein Getränkebehälter in den Halter (20; 80) einstellbar ist, hin- und herbewegbar ist, **dadurch gekennzeichnet, daß** der Halter (20; 80) eine Führung (28) aufweist, mit der der Halter (20; 80) beweglich mit dem Klapptisch (10) verbunden ist, so daß der Halter (20; 80) in der Nichtgebrauchslage des Klapptischs (10) zwischen der Nichtgebrauchslage und einer zweiten Gebrauchslage hin- und zurückbewegbar ist.

2. Klapptisch nach Anspruch 1, **dadurch gekennzeichnet, daß** der Halter (80) eine Schiebeführung (82, 84) aufweist, mit der der Halter (80) zu einer Seite aus dem Klapptisch (10) heraus verschiebbar am Klapptisch (10) angebracht ist.

3. Klapptisch nach Anspruch 1, **dadurch gekennzeichnet, daß** der Halter (20) ein Schwenkgelenk (28) als Führung aufweist, mit dem der Halter (20) um einen be grenzten Schwenkwinkel aus einer Oberseite des Klapptischs (10) herausschwenkbar am Klapptisch (10) angebracht ist.

4. Klapptisch nach Anspruch 1, **dadurch gekennzeichnet, daß** die Führung ein Schwenkgelenk (28; 82, 84) aufweist, durch das der Halter (20; 80) um einen begrenzten Schwenkwinkel nach unten verschwenkbar mit dem Klapptisch (10) verbunden ist.

5. Klapptisch nach Anspruch 3 oder 4, **dadurch gekennzeichnet, daß** der Halter (20) ein Öffnungsfederelement (30) aufweist, das den Halter (20) in die Gebrauchslage verschwenkt, und daß der Halter (20) eine entriegelbare Verriegelungseinrichtung (38, 40) aufweist, die bis zur Entriegelung den Halter (20) gegen die Kraft des Öffnungsfederelements (32) in der Nichtgebrauchslage verriegelt hält.

6. Klapptisch nach Anspruch 4, **dadurch gekennzeichnet, daß** der Halter (20) eine Stütze (44; 90) für den Getränkebehälter aufweist, die durch ein Schwenkgelenk (28; 92) in der Nichtgebrauchslage des Klapptischs (10) und der Gebrauchslage des Halters (20; 80) um einen begrenzten Schwenkwinkel vom Halter (20; 80) nach unten schwenkbar ist.

7. Klapptisch nach Anspruch 6, **dadurch gekennzeichnet, daß** die Stütze (44) ein Federelement (32) aufweist, das die Stütze (44) nach unten verschwenkt.

8. Klapptisch nach Anspruch 7, **dadurch gekennzeichnet, daß** ein Öffnungsfederelement (32) des Halters (80) zugleich die Stütze (44) nach unten verschwenkt.

9. Klapptisch zur Anbringung an einer Rückseite einer Rückenlehne eines Fahrgastsitzes in einem Omnibus oder Flugzeug, wobei der Klapptisch ein Schwenkgelenk aufweist, durch das der Klapptisch zwischen einer Nichtgebrauchslage, in der der Klapptisch im wesentlichen an der Rückseite der Rückenlehne des Fahrgastsitzes anliegt, und einer Gebrauchslage, in der der Klapptisch in etwa horizontal von der Rückseite der Rückenlehne des Fahrgastsitzes absteht, hin- und zurückschwenkbar ist, nach einem der vorhergehenden Ansprüche, **dadurch gekennzeichnet, daß** der Klapptisch (10) einen Sicherheitsbeschlag (16, 60, 64) mit einem Anschlag (76), der den Schwenkwinkel des Klapptischs (10) in Richtung der Gebrauchslage begrenzt, aufweist, und daß der Anschlag (76) durch Überschreiten einer am Klapptisch (10) in Richtung der Gebrauchslage wirkenden Grenzbelastung überwindbar ist.

10. Klapptisch nach Anspruch 9, **dadurch gekennzeichnet, daß** der Anschlag (76) vom Umfang eines Schwenkzapfens (16) absteht, um den der Klapptisch (10) zwischen der Nichtgebrauchslage und der Gebrauchslage hin- und zurückschwenkbar ist, und daß der Anschlag (76) mit einem Schieber (60) zusammenwirkt, der von einer Schieberfeder (64) gegen den Schwenkzapfen (16) gedrückt wird, wobei der Anschlag (76) bei Überschreiten der am Klapptisch (10) wirkenden Grenzbelastung den Schieber (60) außer Eingriff drückt.

11. Klapptisch nach Anspruch 1 oder 9, **dadurch gekennzeichnet, daß** der Klapptisch (10) einen Adapter (100) aufweist, der durch Formschluß in einer eindeutige Winkelstellung zu einer Schwenkachse (18) des Schwenkgelenks am Klapptisch (10) anbringbar ist, und daß der Adapter (100) durch Formschluß in einer eindeutigen Winkelstellung an einem Klapptischhalter (104) an der Rückseite der Rückenlehne des Fahrgastsitzes anbringbar ist.

12. Klapptisch nach Anspruch 11, **dadurch gekennzeichnet, daß** der Adapter ein Adapterring (100) mit einer Innenkontur (102) und einer Außenkontur ist, die den Formschluß in eindeutiger Winkelstellung bewirken.

## Claims

1. Folding table (10) to attach to the rear part of a backrest of a passenger seat in a bus or in an aircraft, the folding table having a swivel hinge by means of which the folding table can be swivelled to and fro between a not-in-use position, in which the folding table essentially bears against the rear part of the backrest of the passenger seat, and a use position, in which the folding table (10) protrudes approximately horizontally from the rear part of the backrest of the passenger seat, the folding table (10) having a holder (20; 80) for a beverage container, and the holder (20; 80) being connected moveably to the folding table (10) via a guide (28; 82, 84), so that, in the use position of the folding table (10), the holder (20; 80) can be moved to and fro between a not-in-use position, in which the holder (20; 80) is recessed into the folding table (10), and a use position, in which a beverage container can be set into the holder (20; 80), **characterized in that** the holder (20; 80) has a guide (28) with which the holder (20; 80) is connected moveably to the folding table (10), so that, in the not-in-use position of the folding table (10), the holder (20; 80) can be moved to and fro between a not-in-use position and a second use position.

2. Folding table according to Claim 1, **characterized in that** the holder (80) has a sliding guide (82, 84) with which the holder (80) is attached to the folding table (10) in a manner such that it can be displaced out of the folding table (10) to one side.

3. Folding table according to Claim 1, **characterized in that** the holder (20) has a swivel hinge (28) as guide, with which the holder (20) is attached to the folding table (10) in a manner such that it can be swivelled out of an upper side of the folding table (10) by a limited swivel angle.

4. Folding table according to Claim 1, **characterized in that** the guide has a swivel hinge (28; 82, 84) by means of which the holder (20; 80) is connected to the folding table (10) in a manner such that it can be swivelled downwards by a limited swivel angle.

5. Folding table according to Claim 3 or 4,
**characterized in that** the holder (20) has an opening spring element (30) which swivels the holder (20) into the use position, and **in that** the holder (20) has a releasable locking device (38, 40) which, until it is unlocked, keeps the holder (20) locked in the not-in-use position counter to the force of the opening spring element (32).

6. Folding table according to Claim 4, **characterized in that** the holder (20) has a support (44; 90) for the beverage container, which support can be swivelled downwards from the holder (20; 80) by a limited swivel angle by means of a swivel hinge (28; 92) in the not-in-use position of the folding table (10) and the use position of the holder (20; 80).

7. Folding table according to Claim 6, **characterized in that** the support (44) has a spring element (32) which swivels the support (44) downwards.

8. Folding table according to Claim 7, **characterized in that** an opening spring element (32) of the holder (80) at the same time swivels the support (44) downwards.

9. Folding table (10) to attach to the rear part of a backrest of a passenger seat in a bus or in an aircraft, the folding table having a swivel hinge by means of which the folding table can be swivelled to and fro between a not-in-use position, in which the folding table essentially bears against the rear part of the backrest of the passenger seat, and a use position, in which the folding table (10) protrudes approximately horizontally from the rear part of the backrest of the passenger seat, according to one of the preceding claims, **characterized in that** the folding table (10) has a safety fitting (16, 60, 64) with a stop (76) which limits the swivel angle of the folding table (10) in the direction of the use position, and **in that** the stop (76) can be overcome by a limit load which acts on the folding table (10) in the direction of the use position being exceeded.

10. Folding table according to Claim 9, **characterized in that** the stop (76) protrudes from the circumference of a swivel pin (16) about which the folding table (10) can be swivelled to and fro between the not-in-use position and the use position, and **in that** the stop (76) interacts with a slide (60) which is pressed by a slide spring (64) against the swivel pin (16), with the stop (76) pressing the slide (60) out of engagement when the limit load acting on the folding table (10) is exceeded.

11. Folding table according to Claim 1 or 9,
**characterized in that** the folding table (10) has an adapter (100) which can be attached to the folding table (10) by means of an interlocking connection in an unambiguous angular position with respect to a swivel axis (18) of the swivel hinge, and **in that** the adapter (100) can be attached to a folding-table holder (104) on the rear part of the backrest of the passenger seat by means of an interlocking connection in an unambiguous angular position.

12. Folding table according to Claim 11, **characterized in that** the adapter is an adapter ring (100) with an internal contour (102) and an external contour which bring about the interlocking connection in an unambiguous angular position.

## Revendications

1. Table pliante (10) destinée à être montée sur la face arrière d'un dossier d'un siège de passager dans un omnibus ou un avion, la table pliante présentant une articulation pivotante permettant de pivoter la table pliante entre une position de non utilisation dans laquelle la table pliante s'applique sensiblement contre la face arrière du dossier du siège de passager et une position d'utilisation dans laquelle la table pliante (10) fait saillie approximativement horizontalement de la face arrière du dossier du siège de passager, la table pliante (10) présentant un support (20 ; 80) pour un récipient pour boisson, et le support (20 ; 80) étant connecté à la table pliante (10) de manière mobile par le biais d'un guide (28 ; 82, 84), de sorte que le support (20 ; 80) puisse être déplacé d'avant en arrière dans la position d'utilisation de la table pliante (10) entre une position de non utilisation dans laquelle le support (20 ; 80) est enfoncé dans la table pliante (10) et une position d'utilisation dans laquelle un récipient pour boisson peut être inséré dans le support (20 ; 80), **caractérisée en ce que** le support (20 ; 80) présente un guide (28) avec lequel le support (20 ; 80) est connecté de manière mobile à la table pliante (10), de sorte que le support (20 ; 80) puisse être déplacé d'avant en arrière dans la position de non utilisation de la table pliante (10) entre la position de non utilisation et une deuxième position d'utilisation.

2. Table pliante selon la revendication 1, **caractérisée en ce que** le support (80) présente une glissière (82, 84) avec laquelle le support (80) est monté sur la table pliante (10) de manière à pouvoir être ressorti d'un côté de la table pliante (10).

3. Table pliante selon la revendication 1,
**caractérisée en ce que** le support (20) présente une articulation pivotante (28) en tant que guide, avec laquelle le support (20) est monté sur la table pliante (10) de manière à pouvoir sortir par pivotement suivant un angle de pivotement limité hors d'un côté supérieur de la table pliante (10).

4. Table pliante selon la revendication 1,
**caractérisée en ce que** le guide présente une articulation pivotante (28 ; 82, 84) permettant de connecter le support (20 ; 80) à la table pliante (10) de manière à pouvoir pivoter vers le bas suivant un angle de pivotement limité.

5. Table pliante selon la revendication 3 ou 4,
**caractérisée en ce que** le support (20) présente un élément de ressort d'ouverture (30) qui fait pivoter le support (20) dans la position d'utilisation et **en ce que** le support (20) présente un dispositif de verrouillage déverrouillable (38, 40) qui maintient le support (20) verrouillé dans la position de non utilisation, jusqu'à son déverrouillage, à l'encontre de la force de l'élément de ressort d'ouverture (32).

6. Table pliante selon la revendication 4,
**caractérisée en ce que** le support (20) présente un appui (44 ; 90) pour le récipient pour boisson, qui peut pivoter vers le bas suivant un angle de pivotement limité depuis le support (20 ; 80) par une articulation pivotante (28 ; 92) dans la position de non utilisation de la table pliante (10) et dans la position d'utilisation du support (20 ; 80).

7. Table pliante selon la revendication 6,
**caractérisée en ce que** l'appui (44) présente un élément à ressort (32) qui fait pivoter l'appui (44) vers le bas.

8. Table pliante selon la revendication 7,
**caractérisée en ce qu'**un élément de ressort d'ouverture (32) du support (80) fait en même temps pivoter l'appui (44) vers le bas.

9. Table pliante destinée à être montée sur la face arrière d'un dossier d'un siège de passager dans un omnibus ou un avion, la table pliante présentant une articulation pivotante permettant de pivoter la table pliante entre une position de non utilisation dans laquelle la table pliante s'applique sensiblement contre la face arrière du dossier du siège de passager et une position d'utilisation dans laquelle la table pliante fait saillie approximativement horizontalement de la face arrière du dossier du siège de passager, selon l'une quelconque des revendications précédentes, **caractérisée en ce que** la table pliante (10) présente une ferrure de sécurité (16, 60, 64) avec une butée (76), qui limite l'angle de pivotement de la table pliante (10) dans la direction de la position d'utilisation, et **en ce que** la butée (76) peut être surmontée en dépassant une sollicitation limite agissant sur la table pliante (10) dans la direction de la position d'utilisation.

10. Table pliante selon la revendication 9,
**caractérisée en ce que** la butée (76) dépasse du pourtour d'un tourillon (16) autour duquel la table pliante (10) peut pivoter entre la position de non utilisation et la position d'utilisation et **en ce que** la butée (76) coopère avec un coulisseau (60) qui est pressé par un ressort de coulisseau (64) contre le tourillon (16), la butée (76) pressant le coulisseau (60) hors d'engagement en cas de dépassement de la sollicitation limite agissant sur la table pliante (10).

11. Table pliante selon la revendication 1 ou 9,
**caractérisée en ce que** la table pliante (10) présente un adaptateur (100) qui peut être monté sur la table pliante (10) par engagement par coopération de forme dans une position angulaire univoque par rapport à un axe de pivotement (18) de l'articulation pivotante, et **en ce que** l'adaptateur (100) peut être monté sur la face arrière du dossier du siège de passager par engagement par coopération de forme dans une position angulaire univoque sur un support de table pliante (104).

12. Table pliante selon la revendication 11,
**caractérisée en ce que** l'adaptateur est une bague d'adaptateur (100) avec un contour interne (102) et un contour externe, qui provoquent l'engagement par coopération de forme dans la position angulaire univoque.
